# EUROPEAN PATENT APPLICATION

(11) **EP 0 863 115 A2**
(43) Date of publication of application: **09.09.1998**
(21) Application number: 98200593.6
(22) Date of filing: 25.02.1998
(51) Int. Cl.: C04B 33/32, F27B 9/40, F27B 9/36, F27B 9/10

(54) **Process and plant for firing ceramic products containing interlamellar water**

(30) Priority: 07.03.1997 IT RE970014
(71) Applicant: SACMI COOPERATIVA MECCANICI IMOLA S.c.r.l., 40026 Imola (Bologna) (IT)
(72) Inventor: Lorici, Loris, 41049 Sassuolo (Modena) (IT)
(74) Representative: Corradini, Corrado

(57) **Abstract**

A process for firing ceramic products containing interlamellar water comprising the steps of drying the material at a temperature of the order of 100°C to deprive it of the physically bonded water, rapidly firing it with programmed temperature increase to the maximum required firing temperature, then cooling the material to a temperature of below 100°C, in which after the drying but before the rapid firing the material is raised to a temperature of between 150°C and 350°C within a time T₁ of between 10 minutes and 30 minutes, and is maintained at said temperature, which remains constant, for a time T₂ of between 20 minutes and 40 minutes.

## Description

This invention relates to the manufacture of ceramic products obtained by firing raw clays previously shaped by pressing or extrusion.

Typical examples of said products are ceramic tiles formed by pressing powders, and brick products formed generally by extrusion.

Modern manufacturing technology demands, when possible, a reduction in the duration of the firing cycle, the term "firing" meaning that combination of interdependent thermal cycles to which the ceramic pieces are subjected after their initial shaping to achieve the finished fired product, ie drying and high temperature processing.

Drying is required to reduce the water content of the preformed products to a level compatible with the subsequent heat treatment at higher temperature, and generally represents a critical point of the entire manufacturing process, especially in the case of the more rapid cycles, and for all types of clay and ceramic material.

In this respect, the water contained in clays or ceramic materials involves various types of bonds, namely a physical bond, a physico-chemical bond, or a chemical bond, said types of bonds being able to coexist.

Chemically bonded water, or water of crystallization, remains after each drying step, consequently its behaviour does not form part of the present considerations.

Physically bonded water is that water which involves the weakest bond and is that which is normally cited in common technical language.

In this respect, when in the industrial field it is said that a product has been dried, it signifies that the product has totally yielded its physically retained water close to 100°C.

In contrast, that water known commonly as expansion or interlamellar water, typical of expanding lattice clays such as montmorillonites, involves a chemico-physical bond which is much more resistant than a simple physical bond, and generally remains within a piece which has been dried by normal procedures, it requiring a much higher temperature for its expulsion.

In normal manufacturing processes for ceramic products, after remaining in a dryer at a temperature of between about 100°C and 120°C, these are fed into a firing kiln which gradually raises their temperature to beyond 1000°C.

For those raw materials not containing water with a physico-chemical bond, this level of drying is compatible with any final thermal process, however rapid it may be.

This is not however the case with raw materials containing interlamellar water.

With such materials, so-called normal drying must be followed by a subsequent final thermal process comprising a very slow preheating step to enable this residual water to escape before the maximum required temperature is reached.

In this respect, most current plants for manufacturing such ceramics provide a residence time in the kiln of 10-12 hours, and sometimes much more.

An object of this patent is to provide a manufacturing process for ceramic products such as brick products, which comprises a production cycle of duration comparatively much shorter than that obtainable up to the present time, and which can incorporate modern roller kilns using any type of clay and/or natural or artificial mix.

A further object of the patent is to provide a plant for implementing the manufacturing process.

The objects of the invention are achieved by a firing cycle for products previously dried at a temperature of the order of 100°C to eliminate physically bonded water, all other necessary reactions being completed in a single plant arranged for such use.

In the firing cycle of the invention, said starting products are raised within a very short time T₁ to a temperature of between 150°C and 350°C, at which they are maintained for a time T₂, T₁ and T₂ being a function of the materials themselves, of their form and of their thickness.

In the case of normal extruded roof tiles of weight 3.5 kg, T₁ = 10-30 minutes and T₂ = 20-40 minutes.

Both these values will evidently be considerably less for smaller thicknesses, for simpler forms and for raw materials with less interlamellar water.

The temperature range of 150°C-350°C remains however unaltered.

After these times the products are subjected to a temperature which increases until the maximum required temperature is reached.

Said cycle is implemented according to the invention within a structure comprising at least one channel or tunnel provided with a motorized roller table.

In the first part of the channel, starting from the product entry end, above and below the roller table there are provided hot air distributors which involve the entire width of the roller table and direct air streams against it.

Said distributors are connected, individually or in groups, to single hot air generators arranged horizontally along the sides of the machine.

Suitable temperature measurement probes control the generators, to maintain the temperature constant at the desired level.

In the second part of the channel, which indicatively has a length of between three and four times the length of the first part, there is provided the usual heating and cooling equipment of quick firing kilns.

The merits and the operational and constructional characteristics of the invention will be apparent from the ensuing detailed description given with reference to the figures of the accompanying drawings, which illustrate a preferred embodiment of the invention by way of non-limiting example.

Figure 1 is a schematic side view of the plant of the invention.

Figure 2 is a plan view of one of the hot air generator elements provided in the first part of the channel of the invention.

Figure 3 is a partly sectional side view of an enlarged part of the device shown in Figure 2.

Figures 4A and 4B show a section through the second part of the plant of Figure 1, limited to a single channel.

Figure 5 shows a possible temperature pattern within the first part of the plant.

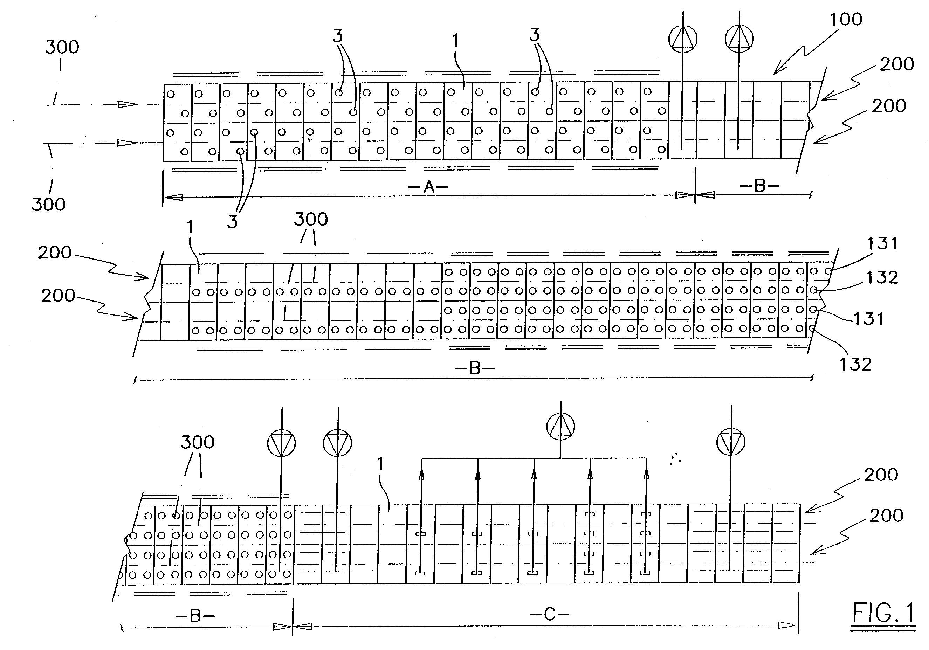

Figure 1 shows a plant comprising a structure 100 with two superposed channels or tunnels 200, in each of which there is arranged a roller table 300 motorized in the usual manner by means, not shown.

Three portions -A-, -B- and -C- are indicated in the longitudinal direction within the channels 200.

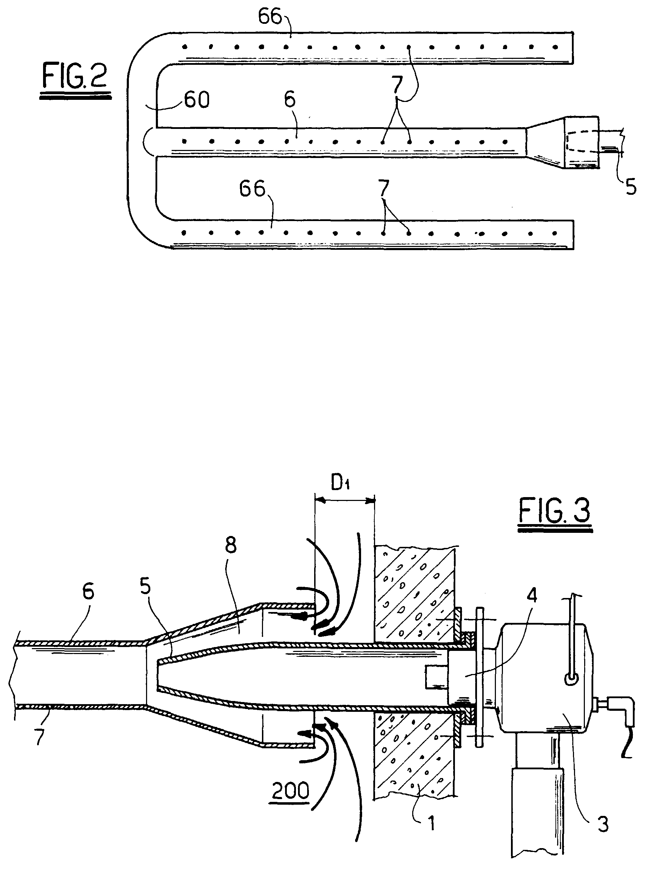

In the first or entry portion -A-, each lateral wall 1 bounding the channels 200 (see Figure 3) is provided with through holes, along lines positioned above and below each roller table 300, with which holes there being associated a burner 3, this latter being illustrated schematically as it is of known type.

According to the invention, on the exit mouth 4 of the burner 3 there is sealedly mounted a nozzle 5, which is inserted into the corresponding hole in the wall 1.

The nozzle is provided at its rear with a flange by which it is locked against the wall 1, by way of suitable gaskets.

The nozzle 5 consists of a tubular body of refractory material, such as silicon carbide, and comprises a terminal restriction.

Said nozzle 5 comprises an initial cylindrical part, and a frusto-conical terminal part which blends into the preceding.

The inner diameter of said cylindrical part is about three times that of the discharge mouth of said frusto-conical part, the angle at the vertex of this latter being about 25°.

The said proportions and angle are in no way to be considered limiting, as they depend on the capacity of the burner used, and on specific factors which govern the heating of the channel 200 and its contents.

Coaxial to the nozzle 5 there is a distributor tube 6, consisting of a cylindrical metal tube provided with at least one longitudinal sets of equidistant holes 7 for discharge of the combustion gas.

Said distributor 6 has an inner diameter greater than the outer diameter of the nozzle 5, so that between the two there is defined an interspace 8 of toroidal shape.

The distributor 6 is horizontal, at its end it dividing into two branches 66 which are parallel to it and are also provided with holes 7.

The arrangement and shape of the upstream end of said distributor tube are important.

Said upstream end is of cylindrical shape and is spaced from the wall 1 by a distance D₁ to define an annular port connecting said interspace 8 to the channel 200.

By virtue of the described means, the combustion gas produced by the burner 3 leaves the nozzle 5 at high velocity, so that about the discharge mouth of the nozzle 5 there is created a vacuum which, in combination with the entrainment by the mass of combustion gas, draws hot air from the channel 200.

In this manner, hot air circulation is created as far as the wall, making the temperature within each channel section uniform, and enabling the temperature to be set to the desired values in a very precise manner.

In the example illustrated in Figure 1, the channel portion -A- involved with the aforedescribed heating devices has a length of 40 metres, each of the superposed roller tables being associated with 18 heater elements.

Those heater elements fixed to one wall are offset from those heater elements fixed to the opposite wall, both in a longitudinal and in a transverse direction.

Downstream of that portion involved with the described heater elements, and in which the interlamellar water is removed at a constant temperature of between 150°C and 350°C, each channel 200 continues without interruption along that portion in which the actual firing of the material takes place.

This portion comprises heater elements of a different form, characteristic of tunnel kilns.

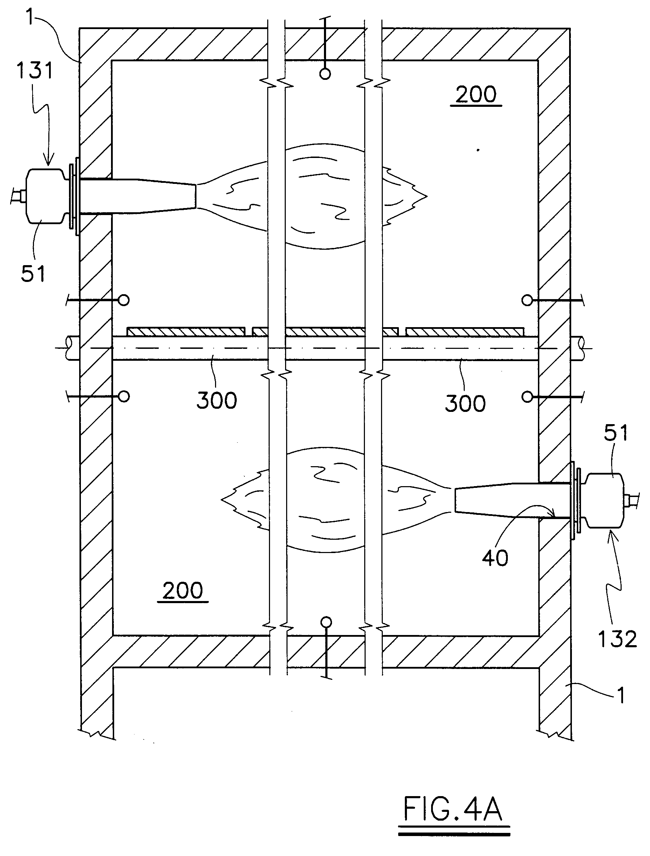

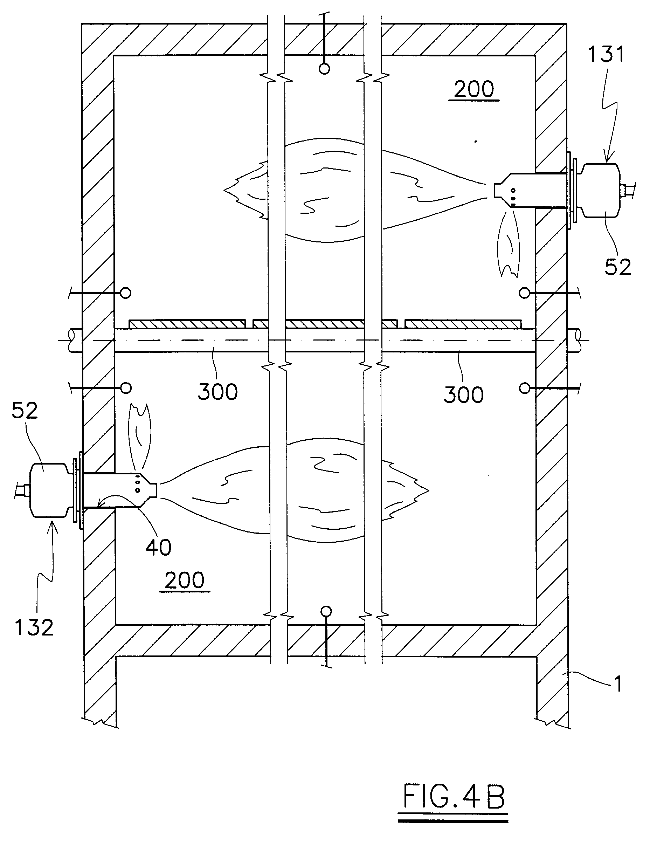

On each side of each channel there are provided two lines 131 and 132 of gas burners, positioned respectively above and below the roller table 300 (Figures 4A, 4B).

The burners of each line are located within holes 40 provided in the side wall 1 of the channel.

In each line there are provided two sets of burners, namely first burners 51 and second burners 52, of known type.

The burners 51 are of normal type for heating mainly the kiln central region, the burners 52 being designed mainly to heat those regions adjacent to the side walls of the kiln.

They are hence complementary to each other and completely interchangeable, their chosen relative positions being the most variable possible, depending only on the required firing conditions expressed in terms of flow distribution and temperature within the channel.

In the illustrated example the channel portion -B- involving the burners 51 and 52 is followed by a portion -C- of usual construction, for the controlled cooling of the product.

The total length of the firing and cooling portions -B- and -C- is 110 metres in the example.

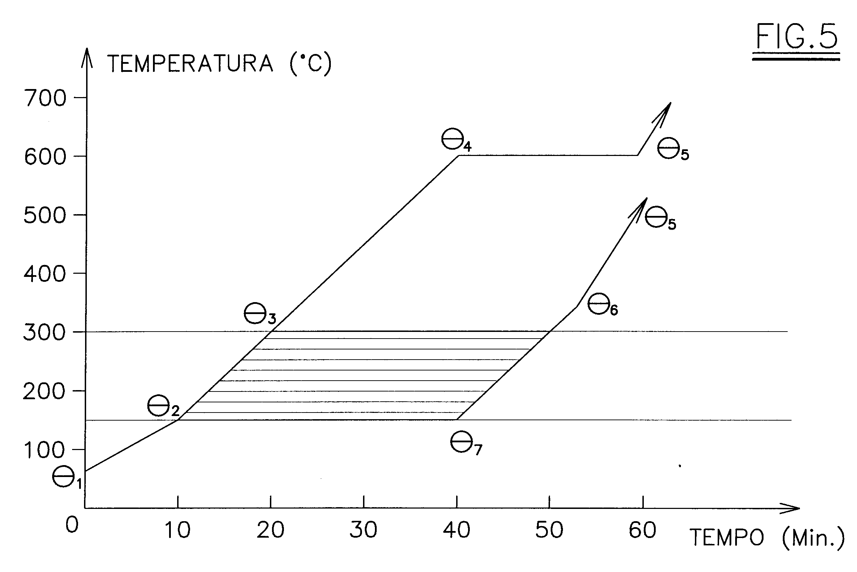

Figure 5 shows some of the possible thermal cycles which can be implemented in the first part of the machine shown in Figure 1, according to the patent.

In effect, this represents a flexible and versatile independent thermal unit able to process any required material as described in this patent.

In processing raw materials containing physico-chemically bonded water, the implemented temperature variation with time can follow the pattern θ₁, θ₂, θ₇, θ₆, θ₅, or θ₁, θ₂, θ₃, θ₆, θ₅, in which case the machine operates as a dryer-heater starting from material already free of physically bonded water.

If instead material free of physico-chemically bonded interlamellar water is used, which has already been dried to eliminate the physically bonded water, the temperature variation with time is similar to θ₁, θ₂, θ₃, θ₄, θ₅, the machine then operating as a usual kiln.

## Claims

1. A process for firing ceramic products containing interlamellar water comprising the steps of:
- drying the material at a temperature of the order of 100°C to deprive it of the physically bonded water;
- rapidly firing it with programmed temperature increase to the maximum required firing temperature;
- cooling the material to a temperature of below 100°C;
characterised in that after the drying but before the rapid firing the material is raised to a temperature of between 150°C and 350°C within a time T₁ of between 10 minutes and 30 minutes, and is maintained at said temperature, which remains constant, for a time T₂ of between 20 minutes and 40 minutes.

2. A process as claimed in claim 1, characterised in that after the time T₂, the temperature of the material increases in a programmed manner until the maximum firing temperature is reached.

3. A process as claimed in claim 1, characterised in that the times T₁ and T₂ are positively influenced by the material thickness.

4. A process as claimed in claim 1, characterised in that the times T₁ and T₂ increase as a function of the quantity of interlamellar water present in the material.

5. A plant for firing ceramic products containing interlamellar water and already dried to eliminate the physically bonded water, comprising at least one channel or tunnel provided with externally adjustable heating means and containing a motorized roller table, characterised by a first part in which the heating means are hot air feed means, and a second part in which the heating means are fuel burners.

6. A plant as claimed in claim 5, characterised in that said second part has a length of three or four times the length of said first part.

7. A plant as claimed in claim 5, characterised in that the heating means of said first part are arranged to heat the material to a temperature of between 150°C and 350°C and to maintain it thereat.

8. A plant as claimed in claim 5, characterised in that the heating means of said second part are burners discharging directly into the kiln and arranged to heat the material to the maximum firing temperature.

9. A plant as claimed in claim 5, characterised in that downstream of the second part of the tunnel there is provided a third part provided with means for cooling the material.

10. A plant as claimed in claim 5, characterised in that the heating means of said first part comprise, within the tunnel, a hot gas distributor consisting of, if viewed in plan, a branched tube which in its entry mouth receives the mouth of a burner in such a manner as to leave external to the burner mouth an annular space through which the hot air existing in the channel is drawn in and recirculated.

11. A plant as claimed in claim 5, characterised in that the heating means of said second part comprise first burners, the exit mouth of which discharges directly into the channel and has a form such as to propel the flame into proximity with the opposing wall of the channel.

12. A plant as claimed in claim 5, characterised in that the heating means of said second part comprise second burners, the exit mouth of which discharges directly into the channel and has a form such as to propel at least a part of the flame into proximity with the that wall to which the burner is fixed.

13. A plant as claimed in claim 5, characterised in that the heating means of said first and second part are spaced apart in any desired manner, according to the required firing cycle.
